# EUROPEAN PATENT APPLICATION

(11) **EP 2 716 619 A2**
(43) Veröffentlichungstag der Anmeldung: **09.04.2014**
(21) Anmeldenummer: 13004769.9
(22) Anmeldetag: 02.10.2013
(51) Int. Cl.: C05F 7/00, C05F 5/00

(54) **Verfahren zur Herstellung von huminstoffhaltigen Düngemittel durch Hydrothermale Karbonisierung von Biomasse**

(30) Priorität: 08.10.2012 DE 102012019659
(71) Anmelder: TerraNova Energy GmbH, 40231 Düsseldorf (DE)
(72) Erfinder: Buttmann, Marc, 40231 Düsseldorf (DE); Schneider, Claudia, 66629 Freisen (DE)

(57) **Zusammenfassung**

Die Erfindung betrifft ein Verfahren zur Herstellung eines huminstoffhaltigen Düngemittels durch Hydrothermale Karbonisierung von Biomasse, insbesondere von Klärschlamm, wobei dieses aus der flüssigen Phase des Karbonisierungsprodukts gewonnen wird. Ferner betrifft die Erfindung eine Vorrichtung zur Durchführung des Verfahrens und die Vewendung des Verfahrens zur Erzeugung von Düngemittel.

## Beschreibung

Die Erfindung betrifft ein Verfahren zur Herstellung eines huminstoffhaltigen Düngemittels durch Hydrothermale Karbonisierung von Biomasse, Insbesondere von Klärschlamm, wobei dieses aus der flüssigen Phase des Karbonisierungsprodukts gewonnen wird. Ferner betrifft die Erfindung eine Vorrichtung zur Durchführung des Verfahrens.

### Stand der Technik:

Bei der Hydrothermalen Karbonisierung (HTC) wird Biomasse unter Luftabschluss bei Temperaturen um die 200°C innerhalb weniger Stunden in einen Kohleschlamm umgewandelt. Der Stand der Technik wird bspw. durch DE 102007062808, DE 102007062809, DE 102007062810, DE 102007062811, DE 102007056170, DE 102008058444 beschrieben. In diesen Schriften wird die Hydrothermale Karbonisierung verschiedener Arten von Biomasse unter unterschiedlichen Reaktionsbedingungen und in verschiedenen Verfahren erläutert.

US 5 217 625 A beschreibt Prozessbedingungen zur Behandlung von Klärschlamm, die denen der HTC ähnlich sind. Hier wird nach der Entwässerung des entstandenen Kohleschlamms ein gut brennbarer Filterkuchen hergestellt, der in einer nachfolgenden thermischen Verwertung energieeffizient entsorgt werden kann.

Bei der Behandlung von Biomasse durch HTC entsteht neben der Kohle, die als Feststoff aus dem Kohleschlamm mittels Filtration gewonnen wird, ein Filtrat. Dieses Filtrat hat eine hohe Belastung insbesondere in Form von Stickstoff- und Kohlenstoffverbindungen.

So treten beispielsweise bei der HTC von Klärschlamm sehr hohe organische Belastungen im Filtrat auf. Diese sind als CSB Werte bis zu 70.000 mg/l messbar und entstehen z T. aufgrund von Huminstoffen, die sich während der Zerfallsreaktionen des Klärschlamms bilden. Diese können, in der Reihenfolge des molekularen Aufbaus, in Form von säure- und basenlöslicher Fulvosäure, wasserlöslichen Huminsäuren oder unlöslichen Huminen auftreten.

Die Stickstoffbelastung eines solchen Filtrats kann bis zu 10.000 mg/l Gesamtstickstoff und 4.000 mg/l Ammoniumstickstoff betragen. Weiterhin ist ein Teil der Phosphorfracht des Klärschlamms im Filtrat gelöst.

Das Filtrat darf aufgrund dieser hohen Belastung nicht ungereinigt in offene Gewässer eingeleitet werden. Aus diesem Grund müssen Anstrengungen unternommen werden, die enthaltenen Nährstoffe Phosphor, Stickstoff und Kohlenstoff in ihrer Konzentration deutlich zu reduzieren.

Dazu werden derzeit die üblichen Techniken der Abwasserbehandlung angewandt.
- Abbau von organischer Fracht durch anaerobe oder aerobe biologische Prozesse, wodurch Kohlenstoffverbindungen durch mikrobiologische Vorgänge zu CH4 und/oder CO2 umgewandelt werden
- Behandlung refraktärer Anteile der CSB Fracht durch Teil-Oxidation, wie beispielsweise durch Ozonierung oder Zugabe von H2O2. Dadurch wird ein größerer Teil der Kohlenstoffverbindungen für einen biologischen Abbau verfügbar
- Rückgewinnung von Phosphor aus dem Filtrat durch Kristallisation mit Magnesiumchlorid zu Struvit (Ammoniummagnesiumphosphat)
- Fällungsreaktionen zum Abbau der Inhaltsstoffe

Die Verfahren stellen einen erheblichen operativen Aufwand dar und erhöhen sowohl die Investitions-als auch die Betriebskosten für eine HTC Anlage.

Aufgrund der damit maximal erzielbaren Abbauraten ergibt sich jedoch selbst nach einer solchen Behandlung noch ein Reinigungsaufwand fur Kläranlagen, in denen das behandelte Filtrat eingeleitet wird.

Es wurde nun überraschend gefunden, dass sich das Filtrat aufgrund seiner Inhaltsstoffe auch als Düngemittel eignet und die ursprünglich im Eingangsstoff enthaltenen Schadstoffe, insbesondere die des Klärschlamms, während der HTC entweder zerstört werden oder im Feststoffanteil, also in der HTC Kohle, verbleiben. Relevante Grenzwerte, die für die Anwendung als Düngemittel festgeschrieben sind, können dadurch eingehalten werden.

So werden organische Schadstoffe durch die HTC Bedingungen zerstört Bei der Karbonisierung von Klärschlamm in einem 2 Liter Laborautoclaven wurden bei einem pH Wert von 4, der durch Zugabe von Schwefelsäure H2SO4 eingestellt wurde, und einer Behandlung bei 200°C über 4 Stunden folgende Abbauraten von Pharmaceutica im resultierenden Kohleschlamm gemessen:
Diclophenac: >70%
Phenazon: > 90%
Carbamazepin: > 95%
Metroprolol: > 75%
Ibuprophen: > 85%

Nach einer Abfiltrierung des Feststoffanteils aus dem Kohleschlamm waren im Filtrat lediglich nur noch die folgenden, sehr geringen Restmengen der ursprünglich im Klärschlamm enthaltenen Konzentrationen der Pharmaceutica nachweisbar:
Diclophenac: < 5%
Phenazon: < 2%
Carbamazepin: < 1%
Metroprolol: < 1%
Ibuprophen: < 1%

Ein ähnlicher Effekt ist bzgl. der Schwermetalle zu erkennen. Es wurde festgestellt, dass bei der HTC von Klärschlamm bei 180°C und 25bar Druck mit einer Aufenthaltsdauer von 2,5h in einem kontinuierlich betriebenen Rührreaktor mit einem Volumen von 1000 l ein Großteil der Schwermetalle in der festen Phase des Kohleschlamms und nach der Filtration im Filterkuchen verbleiben, das Filtrat dagegen kaum Schwermetalle enthält. Der pH Wert der behandelten Suspension wurde dabei durch Zugabe von H2SO4 auf pH5 eingestellt. Ein kontinuierlich betriebener Rührreaktor ist dabei ein druckdichter, beheizter Behälter mit Rührwerk und einem Einlass und einem Auslass, in dem während kontinuierlicher oder abwechselnder Zugabe und Entnahme von Material eine Füllhöhe zwischen 50% und 100%, bevorzugt 60 bis 100%, besonders bevorzugt 70 bis 100% eingehalten wird.

So wurden nach der Entwässerung des Karbonisierungsprodukts in einer Kammerfilterpresse im Filtrat lediglich folgende Restmengen an Schwermetallen im Vergleich zur Eingangsmenge des Klärschlamms ermittelt:
Cu, Pb, Zn, Hg: < 3%
As, Cr, Ni, Cd: < 20%

Da im Filtrat dagegen mehr als 40% des ursprünglich im Klärschlamm enthaltenen Phosphors und Stickstoffs enthalten ist, kann dieses sehr gut als Dünger verwendet werden. Vorteilhaft dabei ist auch, dass sich durch den Eintrag des Filtrats in karge Böden über einen längeren Zeitraum der Humusgehalt erhöht und damit die Fruchtbarkeit des Bodens verbessert wird. Ursächlich dafür ist die Konzentration an Huminstoffen im Filtrat, die aus schwer abbaubaren, langkettigen organischen Verbindungen bestehen, und in Konzentrationen von 20-40% bezogen auf den Trockensubstanzanteil vorliegt.

Es wurde festgestellt, dass das Filtrat aus dem Versuch die Grenzwerte der Deutschen Düngemittelverordnung mit Stand vom 23.04.2012 einhält und damit als Produkt hochwertig nutzbar ist. Die folgende Tabelle zeigt die Analysewerte des Filtrats aus dem Versuch, jeweils bezogen auf den Trockensubstanzanteil des Filtrats und in Klammem jeweils die geforderten Mindest- und Höchstmengen it. Deutscher Düngemittelverordnung vom 23.04.2012:

### Nährstoffe (Mindestwerte It. DüMVO 23.04.2012):

| | |
|---|---|
| Ammoniumstickstoff: | 3,5 % (1%) |
| Gesamtstickstoff: | 12,6% |
| o-Phosphat löslich: | 2,1% (1%) |
| Gesamtphosphor: | 2,4% |
| Gesamtphosphat: | 7,4% |
| Gesamte organische Kohlenstoffe: | 31% |
| (insbesondere Humine, Huminsäure, Fulvosäure) | |
| K2O | 1,5% |
| MgO | 1,2% |
| CaO | 4,2% |
| Na | 0,6% |
| Fe | 0,5% |

### Schwermetalle (Höchstwerte it. DüMVO 23.04.2012):

| | | |
|---|---|---|
| Cr VI | 0,7 mg/kg | (2,0 mg/kg) |
| As | 6,3 mg/kg | (40 mg/kg) |
| Pb | 2,7 mg/kg | (150 mg/kg) |
| Cd | 1,3 mg/kg | (1,5 mg/kg) |
| Cr gesamt | 19,4 mg/kg | (300 mg/kg) |
| Cu | 3,9 mg/kg | (500 mg/kg) |
| Ni | 37 mg/kg | (80 mg/kg) |
| Hg | < 0,01 mg/kg | (1 mg/kg) |
| Tl | < 0,01 mg/kg | (1 mg/kg) |

Es ergeben sich bei der Anwendung des Filtrats aus dem Karbonisierungsprodukt als Dünger jedoch auch einige erhebliche Nachteile:

So ist das Filtrat aufgrund seines hohen Wasseranteils von 90-97% kaum transportwürdig. Eine Ausbringung insbesondere auf landwirtschaftliche Freiflächen ist aufgrund des großen Volumens aufwändig und verursacht hohe Kosten beim Verrieseln. Das Filtrat trägt als Flüssigkeit zudem nicht zur Auflockerung der Bodenstruktur bei. Weiterhin hat es einen sehr starken Eigengeruch, der eine Lagerung und eine Ausbringungen z.B. auf Topfpflanzen oder auf Freiflächen behindert. Durch die schnell abbaubaren Kohlenstoffverbindungen entsteht eine Wachstumshemmung bei Keimlingen. Ebenso entsteht auf der Oberfläche des Filtrats und an den Wandflächen der Lagergefäße bei einer offenen Lagerung innerhalb kurzer Zelt ein biologischer Bewuchs. So wurde festgestellt, daß bereits nach 2 Tagen Lagerung in einem Behälter eine weiße Pilzschicht entsteht.

Als weiteres Problem wurde festgestellt, dass bei der Weiterverarbeitung des Filtrats große Mengen sehr stabiler Schaum entsteht, der für die Anlagentechnik hinderlich ist. So konnten Schaummengen, die während eines Versuchs zur aeroben Stabilisierung des Filtrats auf einer Rieselkolonne entstanden, noch 24 Stunden nach Abbruch des Versuchs nahezu unverändert wiedergefunden werden.

### Aufgabe der Erfindung:

Die Aufgabe der Erfindung ist, durch das Filtrat aus der hydrothermalen Karbonisierung industriell hergestellte Stickstoff- und Phosphordünger zu ersetzen, damit den umweltschädlichen Abbau von Phosphatgestein zu verhindern und gleichzeitig durch die stoffliche Nutzung die Einleitung des Filtrats in Abwasserbehandlungsanlagen zu verhindern.

Die Aufgabe der Erfindung ist es weiterhin, das Filtrat in der Art zu behandeln, dass eine Anwendung möglichst effizient erfolgen kann, indem eine möglichst hohe Konzentration der Nährstoffe erreicht wird um die Kosten des Transports und der Ausbringung als Düngemittel gering zu halten. Ebenso sollen Verfahrensschritte ergänzt werden, die den Eigengeruch des Filtrats und die schnell abbaubaren Kohlenstoffverbindungen reduzieren und einen biologischen Bewuchs in den verwendeten Lagergefäßen verhindern. Weiterhin soll eine Schaumbildung durch das Filtrat zuverlässig vermieden werden, um Probleme beim Transport und der Verteilung, beispielsweise durch Verrieseiungsvorrichtungen, zu verhindern. Ebenso soll das Filtrat so aufgearbeitet werden, dass es neben der Nährstoffzufuhr auch der Lockerung von Böden dient.

### Lösung:

Diese Aufgabe wird erfindungsgemaß dadurch gelöst, dass
- das Filtrat nicht einer Anlage zur Behandlung von Abwasser, beispielsweise einer Kläranlagen, zugeführt wird sondern nach einer Vorbehandlung transportfähig in geschlossenen Behältern verpackt oder abgefüllt wird
- das Filtrat zu einem Konzentrat aufkonzentriert wird, beispielsweise in einer Ultrafiltration oder in einem Verdampfer, und nicht dem HTC Prozess zurückgeführt oder einer Anlage oder Vorrichtung zur Abwasserreinigung zugeführt wird
- das Filtrat oder das Konzentrat in einem biologischen Abbauprozess behandelt wird, wie in einer Vorrichtung zum anaeroben oder aeroben Abbau von organischen inhaltsstoffen durch Mikroorganismen, beispielsweise in einem anaeroben Festbettreaktor oder in einer aeroben Rieselkolonne.
- das Filtrat oder das Konzentrat bis zu einem Feststoff getrocknet wird
- das Filtrat oder das Konzentrat mit Strukturmaterial vermischt wird
- dieses Gemisch anschließend auf Wassergehalte < 20%, bevorzugt < 10% getrocknet wird
- das Filtrat oder das Konzentrat im pH Wert durch Zugabe von Laugen auf pH Werte >8, bevorzugt > 9 und besonders bevorzugt > 10 eingestellt wird und dadurch Stickstoffverbindungen, Insbesondere in Form von Ammoniumstickstoff, abgebaut werden, die im basischen Bereich pH Bereich in gasförmiges Ammoniak überführt und ausgegast werden
- das somit behandelte Filtrat oder Konzentrat anschließend durch Zugabe von Säure im pH Wert erniedrigt wird, um ein weiteres, geruchsverursachendes Ausgasen von Ammoniak zu verhindern
- das behandelte Filtrat oder Konzentrat mit Fungizid versetzt wird
- oder das behandelte Filtrat oder Konzentrat nach einer Erhitzung auf Temperaturen > 70°C, besser > 80°C, insbesondere > 90°C unter Sauerstoffabschluss luftdicht verfüllt wird
- das behandelte Filtrat oder Konzentrat mit Öl oder Entschäumer versetzt wird
- das behandelte Filtrat oder Konzentrat in Flaschen, Fässer, Container, Tanks oder vergleichbarer geschlossener Behälter abgefüllt wird, die mobil sind.
- das bei dieser Behandlung zurückbleibende Restwasser, was beispielsweise als Kondensat im Verdampfer oder als Permeat in der Ultrafiltration anfällt, ohne weitere Behandlungsschritte in die Kläranlage eingeleitet wird, da es nur noch sehr geringe Belastungen aufweist

Das Karbonisierungsprodukt ist dabei das Produkt einer Hydrothermalen Karbonisierung von Biomasse, insbesondere Klärschlamm. Es liegt in Form eines Kohleschlamms mit Wasseranteilen von 50-100%, Insbesondere 30-100%, vor.

Das Filtrat ist dabei die nach einer Entwässerungsstufe, beispielsweise einer Filterpresse oder einer Zentrifuge, verbleibende flüssige Phase der Karbonisierungsprodukts.

Das Konzentrat ist der nach einer Abtrennung von Wasser oder wässrigen Anteilen verbleibende Anteil des Filtrats, der über höhere Konzentrationen der Inhaltsstoffe im Vergleich zum Filtrat verfügt Dies ist beispielsweise bei einem Verdampfer der Sumpfinhalt und bei einer Ultrafiltration das Retentat.

Ein Strukturmaterial ist ein Feststoff, der wasserfrei ein spezifisches Gewicht von 0,8 t/m3 und einen Wasseranteil von < 50% hat. Hierzu zählen insbesondere fasrige Naturmaterialien wie beispielsweise Stroh, Gärresten aus einer Biogasanlage, Gras, Grassilage oder Torf, und Kohlen wie Holzkohle und Pyrolysekoks.

### Vorteile der Erfindung:

Als vorteilhaft erweist sich die Erfindung insbesondere in folgenden Punkten:

Auf eine kostenaufwändige Reinigung des Filtrats des Karbonisierungsprodukts aus hydrothermaler Karbonisierung von Biomasse kann verzichtet werden, da das Filtrat einer stofflichen Nutzung zugeführt werden kann.

Dies wird dadurch unterstützt, dass das Filtrat zu einem transportwürdigen und lagerbaren Konzentrat aufgearbeitet wird und als Düngemittel kostensparend verwertet werden kann. Bedarfsgerecht kann es durch den Verwender verdünnt werden. Durch den Abbau von Geruchsstoffen ist es uneingeschränkt auf Freiflächen, in Pflanztöpfen, bei Unterglaskulturen und im Innenraumbereich einsetzbar. Es ist vor Schimmelbildung geschützt und wird in anwendungsgerechte Behälter luftdicht verfüllt.

Durch Vermischung kann das Düngemittel Strukturmaterial mit Nährstoffen anreichern und damit neben der Düngung auch der Auflockerung von Boden dienen.

Durch die Erfindung wird insbesondere die Anwendung industriell hergestellter Phosphor- und Stickstoffdünger vermieden.

### Ausführungsbeispiele:

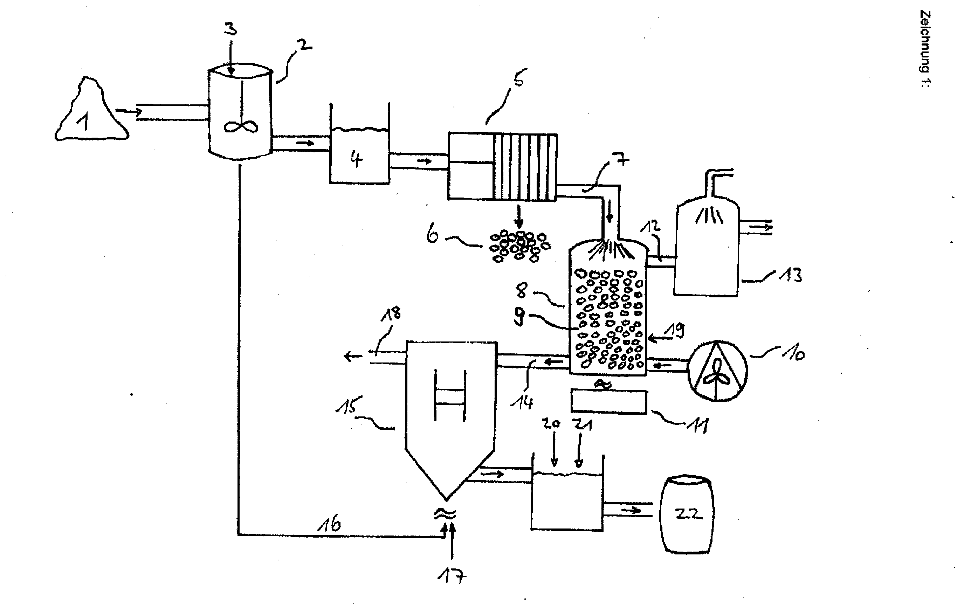

Zeichnung 1 zeigt eine Anlage zur Hydrothermalen Karbonisierung, in der Klärschlamm (1) bei 200°C, 25bar Druck und einem pH Wert von 5 für 2,5 Stunden in einem kontinuierlich betriebenen Rührreaktor (2) unter Zugabe von Schwefelsäure (3) zu einem Karbonisierungsprodukt in Form von Kohleschlamm (4) verwertet wird. In einer nachfolgenden Kammerfilterpresse (5) wird der Feststoff abgetrennt und mit einem Trockensubstanzanteil > 60% als Festbrennstoff (6) einer thermischen Verwertung zugeführt.

Das Filtrat (7) wird einer Rieselkolonne (8) zugeführt. Diese ist als Schüttung von Füllkorpern (9) ausführt, auf denen Mikroorganismen organische Anteile des Filtrats unter Anwesenheit von Sauerstoff abbauen. Zur Beschleunigung des Verfahrens ist ein Lüfter (10) installiert, der eine kontinuierliche Durchströmung der Schüttung mit Umgebungsluft sicherstellt. Ebenso sind Heizorgane (11) an der Rieselkolonne installiert, um die Temperatur des Filtrats auf 30-70°C, vorzugsweise 35-60°C, besonders bevorzugt 35-50°C zu halten und Abkühlungen aufgrund der Verdunstung von Wasser zu vermeiden. Durch die biologischen Abbauprozesse wird Ammoniak über die Abluft der Rieselkolonne (12) abgegeben und in einem Wäscher (13) durch eine Wäsche mit 1%iger Schwefelsaure ausgewaschen. Der pH Wert des Filtrats erhöht sich durch die biologische Aktivität in der Rieselkolonne auf Werte > pH7.

Das geruchslose Filtrat (14) wird anschließend in einem Verdampfer (15) aufkonzentriert. Dieser Wird durch Abwärme aus dem HTC Prozess (16) und einer separaten Gaszufeuerung (17) erhitzt. Der Verdampfer wird bei Unterdruck betrieben, um die Siedepunkt des Filtrats zu erniedrigen und damit Abwärme des HTC Prozesses auf einem Temperaturniveau von 80-150°C, insbesondere 100-130°, nutzbar zu machen. Das Volumen des Filtrats wird durch den Abzug des Kondensats (18) aus dem Verdampfer um 20-40%, bevorzugt 40-60%, besonders bevorzugt 60-80% reduziert. Das Kondensat wird zur Abwasserbehandlung an eine Kläranlage gegeben.

Zur Vermeidung von Schaumbildung wird im unteren Bereich der Rieselkolonne Speiseöl (19) in einer Konzentration von 10-100g pro Tonne Filtrat, bevorzugt 5-10g pro Tonne, insbesondere bevorzugt 1-5 g pro Tonne hinzugegeben. Alternativ ist es dem Fachmann naheliegend, kommerziell verfügbare Entschäumer zu verwendet.

Das Konzentrat wird anschließend im pH Wert auf Werte kleiner pH8, besonders bevorzugt kleiner pH7, insbesondere bevorzugt kleiner pH6 eingestellt (20). Als verwendbare Säuren haben sich Ameisensäure, Zitronensäure und andere organische Säuren bewährt.

Nach der Dosierung des Fungizid Dithiocarbamate (21) in Konzentrationen <1%, bevorzugt < 0,5%, besonders bevorzugt < 0,1% wird das Konzentrat in Flaschen, Fasser oder Kanister gefüllt und luftdicht verpackt (22). Dem Fachmann sind weitere Fungizide geläufig, die alternative eingesetzt werden können, um neben der Vermeidung von Schimmelwuchs im Düngerbehälter auch in der Anwendung Schimmelbildung auf den zu düngenden Pflanzen zu vermeiden.

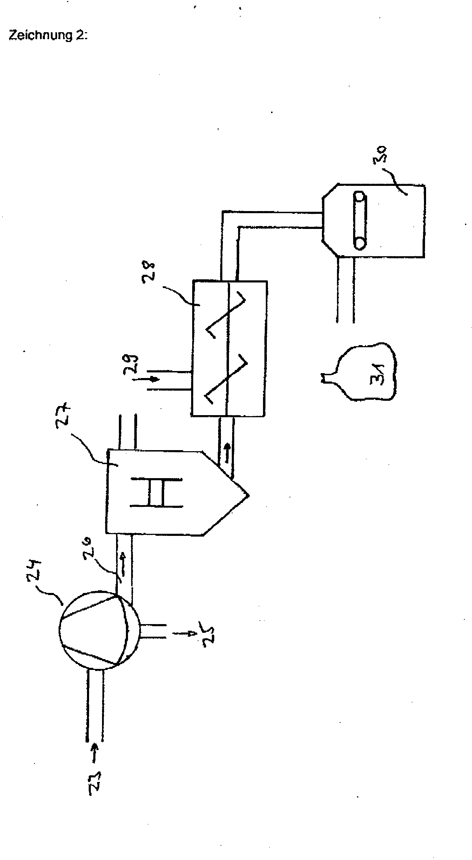

Zeichnung 2 zeigt eine Ausführung, in der das Filtrat (23) einer Ultrafiltration (24) zugeführt wird und das Permeat (25) in eine Kläranlage eingeleitet wird. Das Retentat (26) wird in einem Verdampfer (27) im Volumen um 20-40%, bevorzugt 40-60%, besonders bevorzugt 60-80% reduziert und anschließend in einem Trommelmischer (28) mit auf eine maximale Stückgroße von 50mm vorzerkleinerten Koks aus der Pyrolyse von Holz (29) in einem Gewichtsverhältnis (Retentat zu Pyrolysekoks) von 1:1, bevorzugt 1:2, besonders bevorzugt 1:4, vermischt.

Auf einem Bandtrockner (30) wird das Gemisch auf einen Wassergehalt < 20%, insbesondere < 10% getrocknet. Es wird anschließend unter Sauerstoffabschluss luftdicht verpackt (31).

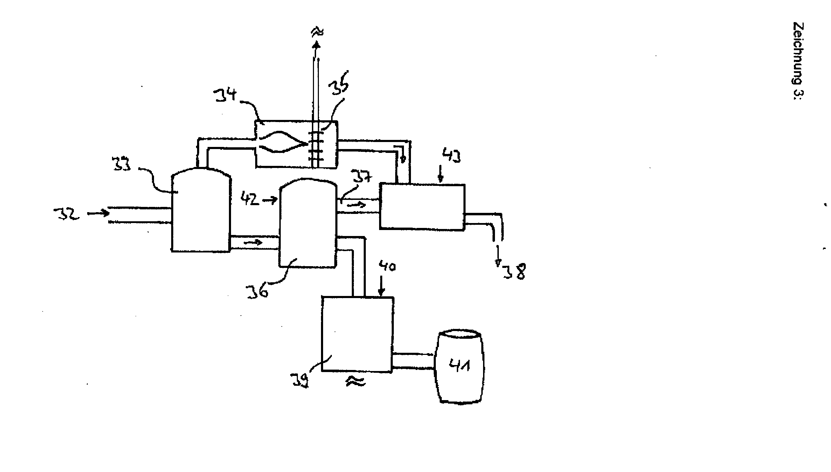

Zeichnung 3 zeigt eine Ausführung, In der das Filtrat (32) einem anaeroben biologischen Abbau in einem luftdichten Faulbehälter (33) zugeführt wird. Das entstehende Faulgas wird in einem Brenner (34) zur Wärmeerzeugung verwendet, die uber einen Wärmetauscher (35) den Wärmebedarf der HTC Anlage auf einem Temperaturniveau von 180-260°C, bevorzugt 200-240°C deckt. Das ausgefaulte Filtrat wird in einem Reaktionsbehälter (36) durch Zugabe von Natronlauge NaOH (42) auf einen pH Wert von 9 eingestellt wobei Ammoniak über den Abgasstrom (37) ausgast. Das Ammoniak wird durch Zugabe von CO2 aus der Verbrennungsluft des Brenners und natürlichen Mineralstoffen wie Gips oder Kalk (43) zu Ammoniumsulfat und Calciumcarbonat ausgefällt (38), das als Dünger eingesetzt werden kann.

In einem weiteren Reaktionsbehälter (39) wird der pH Wert des ausgefaulten Filtrats durch Zugabe von Essigsäure (40) auf pH 6 eingestellt und anschließend auf 90°C für 20min zur Hygienisierung erhitzt. Das Produkt wird nach einer Abkühlung auf 60°C luftdicht in Fässern (41) verfüllt.

## Patentansprüche

1. Verfahren zur Herstellung eines huminstoffhaltigen Düngemittels durch Hydrothermale Karbonisierung von Biomasse, insbesondere von Klärschlamm, **dadurch gekennzeichnet,** t, dass dieses aus dem Filtrat des Karborlisierungsprodukts gewonnen wird und in geschlossene Behälter abgepackt oder abgefüllt wird.

2. Verfähren nach Anspruch 1, **dadurch gekennzeichnet, dass** das Filtrat des Karbonisierungsprodukts vor dem Abpacken oder Abfüllen aufkonzentriert und/oder getrocknet wird

3. Verfahren nach einem der vorgenannten Ansprüche, **dadurch gekennzeichnet,** t, dass das Filtrat des Karbonisierungsprodukts vor dem Abpacken oder Abfüllen einem biologischen Abbauprozess zugeführt wird

4. Verfahren nach einem der vorgenannten Ansprüche, **dadurch gekennzeichnet,** t, dass das Filtrat des Karbonisierungsprodukts vor dem Abpacken oder Abfüllen durch Zugabe von Lauge auf einen pH Wert > 7, bevorzugt >8, besonders bevorzugt >9, eingestellt wird

5. Verfahren nach Anspruch 4, **dadurch gekennzeichnet,** t, dass das im pH Wert angepaßte Filtrat des Karbonisierungsprodukts durch Zugabe von Säure vor dem Abpacken oder Abfüllen auf einen pH Wert <7 abgesenkt wird

6. Verfahren nach einem der vorgenannten Ansprüche, **dadurch gekennzeichnet, dass** das Filtrat des Karbonisierungsprodukts mit einem Strukturmaterial vermischt wird und anschließend auf einen Wasseranteil < 20%, bevorzugt < 10% getrocknet wird

7. Verfahren nach einem der vorgenannten Ansprüche, **dadurch gekennzeichnet,** t, dass das Filtrat oder Filtrat/Strukturmaterialgemisch vor dem Abpacken oder Abfüllen mit einem Fungizid versetzt wird

8. Verfahren nach einem der vorgenannten Ansprüche, **dadurch gekennzeichnet,** t, dass das Filtrat des Karbonisierungsprodukts vor dem Abpacken oder Abfüllen auf eine Temperatur größer 70°C, bevorzugt größer 80°C, besonders bevorzugt größer 90°C erhitzt wird

9. Verfahren nach Anspruch 8, **dadurch gekennzeichnet,** t, dass das erhitzte Filtrat anschließend unter Sauerstoffabschluss abgefüllt wird

10. Verfahren nach einem der vorgenannten Ansprüche, **dadurch gekennzeichnet,** t, dass das Filtrat des Karbonisierungsprodukts insbesondere vor oder während des biologischen Abbauprozesses oder vor dem Abfüllen mit Öl oder Entschäumer versetzt wird

11. Eine Vorrichtung zur Durchführung des Verfahrens

12. Verwendung des Verfahrens nach Anspruch 1 bis 10 zur Erzeugung von Düngemittel
